# EUROPÄISCHE PATENTANMELDUNG

(11) **EP 1 622 422 A2**
(43) Veröffentlichungstag der Anmeldung: **01.02.2006**
(21) Anmeldenummer: 05105556.4
(22) Anmeldetag: 22.06.2005
(51) Int. Cl.: H04R 25/00

(54) **Hörhilfe-Bauteil für mobile Kommunikationsendgeräte**

(30) Priorität: 26.07.2004 DE 102004036255
(71) Anmelder: SIEMENS AKTIENGESELLSCHAFT, 80333 München (DE)
(72) Erfinder: Hülskemper, Michael, 46569, Hünxe (DE)

(57) **Zusammenfassung**

Die Erfindung betrifft ein Hörhilfe-Bauteil (1) mit einer Spule (2), die zur induktiven Kopplung mit einer Hörgerät-Spule (4) ausgebildet ist, wobei das Hörhilfe-Bauteil (1) einen Audioanschluss (6) zum Empfangen von Audiosignalen aufweist, sowie eine Kombination aus einem solchen Hörhilfe-Bauteil (1) und einem mobilen Kommunikationsendgerät (8).

## Beschreibung

Die Erfindung bezieht sich auf ein Hörhilfe-Bauteil mit einer Spule, die zur induktiven Kopplung mit einer Hörgerät-Spule ausgebildet ist. Um hörgeschädigten Benutzern mobiler Kommunikationsendgeräte eine Kommunikation zu ermöglichen, werden sog. "HAC"-Spulen eingesetzt, wobei das Hör-Hilfe-Bauteil in einem solchen Fall von der Spule selbst gebildet wird. Dabei steht die Abkürzung "HAC" für "Hearing Aid Compatibility".

Solche HAC-Spulen werden üblicher Weise auf einen Rahmen einer Hörkapsel eines mobilen Kommunikationsendgeräts aufgebracht und zumeist elektrisch parallel zu einer Hörkapsel-Schwingspule betrieben.

Dabei wird es als nachteilig angesehen, dass die elektromechanische Konstruktion der Hörkapsel-Schwingspule, die als Lautsprecher wirkt, die Eigenschaften der HAC-Spule beeinflusst, da sie als Spulenkern wirkt.

Im Übrigen ist eine Ausstattung mobiler Kommunikationsendgeräte mit Hörhilfe-Bauteilen gerade in den USA ein aktuelles Thema, da neue gesetzliche Bestimmungen vorschreiben, dass Hersteller mobiler Kommunikationsendgeräte verpflichtet sind, wenigstens zwei mobile Kommunikationsendgeräte in einem Produkt-Portfolio zu haben, welche speziellen HAC-Anforderungen genügen. Einschlägige Vorschriften sind in dem "Hearing Aid Compatibility Act" von 1988 niedergelegt.

Ausgehend hiervon liegt der Erfindung die Aufgabe zugrunde, ein Hörhilfe-Bauteil bereitzustellen, das zur zweckmäßigen Aufrüstung mobiler Kommunikationsendgeräte geeignet ist, sowie eine zugehörige Kombination aus einem Hörhilfe-Bauteil und einem mobilen Kommunikationsendgerät anzugeben.

Diese Aufgabe wird hinsichtlich des Hörhilfe-Bauteils der eingangs genannten Art, dadurch gelöst, dass das Bauteil einen Audioanschluss zum Empfangen von Audiosignalen aufweist. Auf diese Weise wird es ermöglicht, dass Hörhilfe-Bauteil an mobile Kommunikationsendgeräte anzuschließen, die über einen entsprechenden Audio-Ausgang verfügen. Entweder lässt sich das Hörhilfe-Bauteil direkt an ein mobiles Kommunikationsendgerät anschließen oder es können geeignete Adapter bereitgestellt werden, die einen solchen Anschluss unterstützen.

Der Audioanschluss ist bevorzugt als Schnittstelle ausgebildet. Dabei kann diese Schnittstelle hinsichtlich ihrer Auslegung an übliche Schnittstellen von mobilen Kommunikationsendgeräten angepasst sein. Die konkrete Auswahl der Schnittstelle liegt im Belieben des Fachmanns. Zu gewährleisten ist ausschließlich, dass ein Anschluss an einen Audio-Ausgang eines mobilen Kommunikationsendgerätes ermöglicht wird.

Bei einer bevorzugten Ausführungsform ist das Hörhilfe-Bauteil als Aufsteck-Deckel (auch als "Clip-on-Cover" bekannt) eines mobilen Kommunikationsendgerätes ausgebildet, wobei die Spule des Hörhilfe-Bauteils bevorzugt parallel zu einem Schallwandler geschaltet ist. In dem Aufsteck-Deckel sind somit die HAC-Spule und der Schallwandler (Lautsprecher) integriert. In diesem Fall ist eine Parallelschaltung der HAC-Spule und des Schallwandlers besonders einfach möglich. Alternativ ist es auch denkbar, dass der Aufsteck-Deckel ein gesondertes Paar Kontakte aufweist, die den Audioanschluss bilden und mit einem zugehörigen Anschluss des mobilen Kommunikationsendgerätes zur Ausgabe von Audiosignalen zusammenwirken.

Auf diese Weise lässt sich eine sehr große Anzahl von mobilen Kommunikationsendgeräten im Nachhinein mit einer HAC-Spule nachrüsten.

Sowohl der Ausführungsform der Erfindung, bei der das Hörhilfe-Bauteil über eine Schnittstelle an ein mobiles Kommunikationsendgerät angeschlossen wird, als auch bei der Ausführungsform als Aufsteck-Deckel ist vorgesehen, dass das Hörhilfe-Bauteil nicht in das mobile Kommunikationsendgerät unmittelbar integriert wird. Vielmehr handelt es sich bei dem Hörhilfe-Bauteil um ein Zubehörteil, das zum Nachrüsten mobiler Kommunikationsendgeräte benutzt werden kann.

Die oben angesprochene Aufgabe wird hinsichtlich der Kombination gelöst durch eine Kombination aus einem mobilen Kommunikationsendgerät und einem Hörhilfe-Bauteil der oben beschriebenen Art, bei der das mobile Kommunikationsendgerät einen Audio-Ausgabe-Anschluss aufweist, der an den Audioanschluss des Hörhilfe-Bauteils angepasst ist. Bevorzugt weist das mobile Kommunikationsendgerät für den Audioausgabeanschluss eine Schnittstelle auf, die zu einer Schnittstelle des Hörhilfe-Bauteils passt.

Dabei kann der Audioausgabe-Anschluss des mobilen Kommunikationsendgerätes vorzugsweise von einem Multifunktionsanschluss bereitgestellt sein. Bei vielen mobilen Kommunikationsendgeräten ist eine sog. Zubehör-Lade-Schnittstelle vorgesehen, die bereits Audio-Signale für optionale HeadSets oder CarKits zur Verfügung stellt. Gerade diese Schnittstelle kann zum Zusammenwirken mit dem Hörhilfe-Bauteil ausgeführt sein.

Bevorzugt ist für das mobile Kommunikationsendgerät ein Audio-Betriebsprofil vorgesehen, das an akustische Eigenschaften des Hörhilfe-Bauteils angepasst ist. Insofern verfügt das mobile Kommunikationsendgerät über ein bestimmtes HAC-Betriebsprofil, was beispielsweise über eine Aktualisierung der Firmware des mobilen Kommunikationsendgerätes eingerichtet werden kann.

Es ist von Vorteil, wenn das mobile Kommunikationsendgerät eine aktive Treiberstufe für eine induktive Last der Spule des Hörhilfe-Bauteils aufweist. Auf diese Weise kann auch eine Stromversorgung für das Hörhilfe-Bauteil bereitgestellt werden. Es wird jedoch davon ausgegangen, dass aufgrund der Hochohmigkeit der Spule des Hörhilfe-Bauteils auf eine solche aktive Treiberstufe in den meisten Anwendungsfällen verzichtet werden kann.

Bei einem integrierten Ausführungsbeispiel der Kombination kann vorgesehen sein, dass das Hörhilfe-Bauteil in das mobile Kommunikationsendgerät, bevorzugt seine Oberschale, integriert ist, in einem Abstand zu einem Lautsprecher des mobilen Kommunikationsendgerätes angeordnet ist und der Audioanschluss unmittelbar mit einem Audioausgang auf einer Schaltkreisplatine des mobilen Kommunikationsendgerätes verbunden ist. Bei dieser Ausführungsform ist das Hörhilfe-Bauteil in das mobile Kommunikationsendgerät eingebaut, wobei eine unmittelbare Kontaktierung der Spule an der Schaltkreisplatine vorgenommen wird. In diesem Fall wird der Audioanschluss des Hörhilfe-Bauteils von den Spulenkontakten selbst gebildet.

Ausführungsbeispiele der Erfindung werden nachfolgend unter Bezugnahme auf die Zeichnung noch näher erläutert. Die einzelnen Figuren zeigen:
- Figur 1: eine schematische Darstellung eines Hörhilfe-Bauteils gemäß einer ersten Ausführungsform in Kombination mit einem mobilen Kommunikationsendgerät und einem Hörgerät und
- Figur 2: eine schematische Darstellung eines Hörhilfe-Bauteils gemäß einer zweiten Ausführungsform in Kombination mit einem mobilen Kommunikationsendgerät und einem Hörgerät.

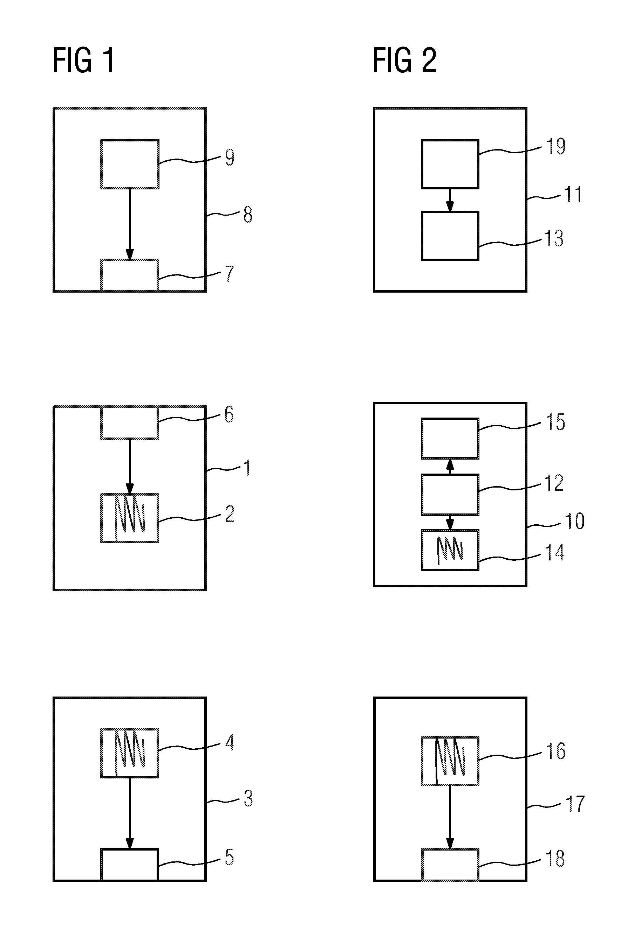

Bei der anhand von Figur 1 veranschaulichten ersten Ausführungsform eines Hörhilfe-Bauteils 1 ist eine Hörhilfe-Spule (HAC-Spule) 2 vorgesehen, die zur induktiven Kopplung mit einem Hörgerät 3 ausgebildet ist. Auch das Hörgerät 3 ist mit einer Spule 4 ausgestattet, so dass Audiosignale von der Hörhilfe-Spule 2 zu der Spule 4 durch induktive Kopplung übertragen werden können. Im Hörgerät 3 selbst ist ein Lautsprecher 5 vorgesehen, der die über die Spule 4 empfangenen Audiosignale für einen Benutzer des Hörgerätes 3 wiedergibt.

Das Hörhilfe-Bauteil 1 erhält die über die Hörhilfe-Spule 2 zu übertragenden Audiosignale von einer Schnittstelle 6, die zum Zusammenwirken mit einer Multifunktions-Schnittstelle 7 eines mobilen Kommunikationsendgerätes 8, insbesondere Mobiltelefons, angepasst ist. Die Multifunktions-Schnittstelle 7, die auch als Multifunktionsanschluss bezeichnet werden kann, steht in Verbindung mit einer zentralen Steuereinrichtung 9 des mobilen Kommunikationsendgerätes 8. Die zentrale Steuereinrichtung 9 kann beispielsweise auf einem Basisbandchip des mobilen Kommunikationsendgerätes 8 realisiert sein.

Die Multifunktions-Schnittstelle 7 kann eine kombinierte Zubehör-Lade-Schnittstelle sein, die bei dem mobilen Kommunikationsendgerät 8 zum Anschluss externer Geräte, wie einem Kopfhörer oder einer KFZ-Freisprecheinrichtung, oder auch eines Ladgerätes ausgestaltet ist. Die Multifunktions-Schnittstelle 7 weist Kontakte auf, die mit einer Stromversorgung des mobilen Kommunikationsendgerätes 8 verbunden sind. Auf diese Weise kann das Hörhilfe-Bauteil 1 über die Multifunktions-Schnittstelle 7 und die Schnittstelle 6 mit Spannung versorgt werden, wobei bei Bedarf das Hörhilfe-Bauteil zur Bereitstellung der geeigneten Betriebsspannung für das Hörhilfe-Bauteil eine gesonderte Treiberstufe aufweist.

Anhand der Figur 2 wird nunmehr eine zweite Ausführungsform eines Hörhilfe-Bauteils 10 erläutert. Das Hörhilfe-Bauteil 10 ist allgemein als Aufsteck-Deckel ("Clip-on-Cover") ausgebildet und kann universell benutzbare Befestigungseinrichtungen für ein Anbringen an unterschiedlichen mobilen Kommunikationsendgeräten wie Mobiltelefonen aufweisen. Im vorliegenden Ausführungsbeispiel ist die äußere Form des Aufsteckdeckels 10 an eine äußere Form eines zugehörigen Mobiltelefons 11 angepasst. Der Aufsteckdeckel 10 kann auch als wechselbare Oberschale eines Mobiltelefons vorgesehen sein.

Der Aufsteckdeckel 10 weist einen Audioanschluss 12 auf, der mit einem zugehörigen Audioanschluss 13 beispielsweise über Kontaktfedern in Verbindung steht, wenn das Hörhilfe-Bauteil 10 auf das mobile Kommunikationsendgerät 11 aufgesetzt ist. Wie im vorhergehenden Ausführungsbeispiel kann der Audioanschluss 12 zusätzlich zur Bereitstellung einer Betriebsspannung für eine Hörhilfe-Spule 14 benutzt werden. Die Hörhilfe-Spule 14 ist parallel zu einem Schallwandler 15 (Lautsprecher) geschaltet, so dass der Schallwandler 15 nicht als Spulenkern für die Hörhilfe-Spule 14 wirkt. Insbesondere wird eine induktive Übertragung von Audiosignalen von der Hörhilfe-Spule 14 aus auf eine Spule 16 eines Hörgerätes 17 nicht beeinflusst. Ein Abzweig von dem Audioanschluss 12 zu der Spule 14 liegt vor einer Äqualisierungsstufe für den Lautsprecher 15, so dass ein unabhängiges Benutzungsprofil für die Spule einstellbar ist. Ein solches Benutzungsprofil kann auf einem Basisband-Chip des mobilen Kommunikationsendgerätes hinterlegt unter Benutzung der Spule 14 aktiviert werden.

Wie im vorhergehenden Ausführungsbeispiel findet eine induktive Übertragung der Audiosignale über die Spulen 14, 16 zu einem Lautsprecher 18 des Hörgerätes 17 statt.

Die auszustrahlenden Audiosignale werden von einer zentralen Steuereinrichtung 19 bereitgestellt, die mit dem Audioanschluss 13 des mobilen Kommunikationsendgerätes 11 in Verbindung steht.

Es ist hervorzuheben, dass der Aufsteckdeckel 10 nicht notwendigerweise den Schallwandler 15 und die Hörhilfe-Spule 14 enthalten muss. Vielmehr kann ausschließlich die Hörhilfe-Spule 14 als Audiosignalübertragungseinrichtung bei dem Aufsteckdeckel 10 vorhanden sein. In diesem Fall einer alternativen Ausführungsform dienen Kontaktfedern des Audioanschlusses 12 ausschließlich zur Übertragung von Audiosignalen zu der Hörhilfe-Spule 14.

Beiden erläuterten Ausführungsformen der Erfindung ist gemeinsam, dass sie gerade für ein Mobiltelefon als Kommunikationsendgerät "extern" einsetzbar sind, so dass ein Nachrüsten von Mobiltelefonen mit der Hörhilfe-Spule 2 bzw. 14 ermöglicht wird.

Bei einer weiteren Ausführungsform der Erfindung ist eine integrierte Lösung für die Kombination aus einem Hörhilfe-Bauteil und einem mobilen Kommunikationsendgerät vorgesehen. Dieser Ausführungsform ist keine besondere Figur gewidmet. In Anlehnung an die Figur 2 wird der Aufsteck-Deckel (10) im Wesentlichen von einer Oberschale des mobilen Kommunikationsendgerätes ersetzt. In dieser Oberschale ist die Hörgerät-Spule in Abweichung zum Stand der Technik entfernt von dem Lautsprecher angeordnet, wobei eine konstruktive Entkopplung zwischen dem Lautsprecher einerseits und der Hörgerät-Spule andererseits erzielt wird. Die Spule des Hörhilfe-Bauteils ist unmittelbar an einer Schaltkreisplatine des mobilen Kommunikationsendgerätes kontaktiert, und zwar an einem geeigneten Audio-Ausgang.

## Patentansprüche

1. Hörhilfe-Bauteil (1; 10) mit einer Spule (2; 14), die zur induktiven Kopplung mit einer Hörgerät-Spule ausgebildet ist,
**dadurch gekennzeichnet, dass**
das Hörhilfe-Bauteil (1; 10) einen Audioanschluss (6; 12) zum Empfangen von Audiosignalen aufweist.

2. Hörhilfe-Bauteil nach Anspruch 1,
**dadurch gekennzeichnet, dass**
der Audioanschluss (6; 12) als Schnittstelle ausgebildet ist.

3. Hörhilfe-Bauteil nach Anspruch 1,
**dadurch gekennzeichnet, dass**
es als Aufsteck-Deckel eines mobilen Kommunikationsendgerätes ausgebildet ist.

4. Hörhilfe-Bauteil nach Anspruch 3,
**dadurch gekennzeichnet, dass**
die Spule (14) des Hörhilfe-Bauteils parallel zu einem in dem Aufsteck-Deckel integrierten Schallwandler (15) geschaltet ist.

5. Kombination aus einem mobilen Kommunikationsendgerät (8; 11) und einem Hörhilfe-Bauteil nach einem der Ansprüche 1 - 4, bei der das mobile Kommunikationsendgerät (8; 11) einen Audioausgabe-Anschluss (7; 13) aufweist, der an den Audioanschluss (6; 12) des Hörhilfe-Bauteils (1; 10) angepasst ist.

6. Kombination nach Anspruch 5,
bei der der Audioausgabe-Anschluss (7) des mobilen Kommunikationsendgerätes (8) von einem Multifunktionsanschluss gebildet ist.

7. Kombination nach einem der Ansprüche 5 oder 6,
bei der für das mobile Kommunikationsendgerät (8; 11) ein Audio-Betriebsprofil vorgesehen ist, das an akustische Eigenschaften des Hörhilfe-Bauteils (1; 10) angepasst ist.

8. Kombination nach einem der Ansprüche 5 bis 7,
**dadurch gekennzeichnet, dass**
das das Hörhilfe-Bauteil (1; 10) eine aktive Treiberstufe für eine induktive Last der Spule (2; 14) aufweist.

9. Kombination nach Anspruch 5,
bei der das Hörhilfe-Bauteil in das mobile Kommunikationsendgerät (8; 11) integriert ist, in einem Abstand zu einem Lautsprecher des mobilen Kommunikationsendgerätes (8; 11) angeordnet ist und
der Audioanschluss (6; 12) unmittelbar mit einem Audioausgang auf einer Schaltkreisplatine des mobilen Kommunikationsendgerätes (8; 11) verbunden ist.

10. Kombination nach Anspruch 10,
bei der das Hörhilfe-Bauteil (1; 10) in einer Oberschale des mobilen Kommunikationsendgerätes (8; 11) angeordnet ist.
